(19) **Europäisches Patentamt / European Patent Office / Office européen des brevets**

(11) **EP 4 661 282 A1**

(12) **EUROPEAN PATENT APPLICATION**

(43) Date of publication:
**10.12.2025 Bulletin 2025/50**

(21) Application number: **24382618.7**

(22) Date of filing: **07.06.2024**

(51) International Patent Classification (IPC):
*H02P 9/00* (2006.01)

(52) Cooperative Patent Classification (CPC):
**H02P 9/007; F03D 7/0272; H02J 3/381;**
H02J 2300/28; H02P 2101/15

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Gamesa Renewable Energy Innovation & Technology S.L.**
**31621 Sarriguren (Navarra) (ES)**

(72) Inventors:
• **Péres Morales, Jorge**
  **28806 Alcalá de Henares (ES)**
• **De López Diz, Sergio**
  **28850 Torrejón de Ardoz (ES)**
• **Zarei, Mohammad Ebrahim**
  **28029 Madrid (ES)**
• **Gonzalez Cajigas, Adrian**
  **28934 Móstoles (ES)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **GRID FORMING OPERATION OF A DFIG POWER SYSTEM**

(57) A method of controlling the operation of a rotor side converter (121) of a power generating system (100) of a wind turbine in a grid forming mode is provided. The power generating system (100) comprises a doubly fed induction generator, DFIG, (110) wherein the rotor side converter (121) is coupled to a rotor (112) of the DFIG (110) to control currents in the rotor of the DFIG. The method comprises obtaining a control reference ($V_{ref}$, $Q_{ref}$) for providing voltage control during operation in the grid forming mode, generating, from the control reference ($V_{ref}$, $Q_{ref}$), a reference for a magnetizing voltage ($e_{ref}$) of the DFIG (110), receiving a feedback signal indicative of stator voltage ($v_s$) of a stator (111) of the DFIG (100), generating a rotor current reference signal ($i_{r,ref}$) for a rotor current of the rotor (112) of the DFIG from the magnetizing voltage reference ($e_{ref}$) and the stator voltage feedback signal, and controlling the rotor side converter (121) in accordance with the rotor current reference signal ($i_{r,ref}$).

FIG 3

EP 4 661 282 A1

## Description

FIELD OF THE INVENTION

The present invention relates to a method of controlling the operation of a rotor side converter of a power generating system of a wind turbine in a grid forming mode. It further relates to a respective control system and computer program.

BACKGROUND

Conventionally, the grid frequency of a power grid may be controlled by large power plants with synchronous generators, and the inertia of these machines may help to stabilize the power grid to a nominal grid frequency of 50 or 60 Hz. The increasing use of renewable energy sources, e.g. wind turbines or photovoltaic systems, as power generation systems may provide less support for the power grid, since such renewable energy sources create only little or no inertia. Further, the power output of renewable energy sources varies in dependence on current environmental influences. However, with advanced converter control, the power converter of a wind turbine may emulate selected properties of a synchronous generator to support the power grid. The control may operate the power system in a grid forming mode wherein the power system acts as a voltage source. Known control schemes for grid forming operation include for example virtual synchronous machine (VSM), droop based approaches, matching controller, oscillators, and the like.

Due to its simplicity and resemblance to synchronous generator performance, VSM is often employed. At the core of this algorithm may be a synchronous swing equation. Grid angle (phase) may thereby be determined based on power imbalance. References employing such algorithm include Ma et al., "Stability analysis of sub-synchronous oscillation in power system connected with virtual synchronous DFIG", IET Renewable Power Generation, 2021, or Han et al., "Nonlinear Adaptive Robust Control Strategy of Doubly Fed Induction Generator Based on Virtual Synchronous Generator", IEEE, 2019, [Han 2021]. The grid forming control scheme disclosed in WO 2022/263331 A1 considers for example a VSM on top of a current controller commonly used for grid following operation. This may allow distinguishing the following main control loops: Q-V control, P-f control and the determination of the rotor current references based on the output signals of the QV controller.

Several of these methods employ flux control. For example, a relationship between the equivalent synchronous voltage and the rotor flux may be determined. Jiao et al., "Grid Forming Control for DFIG Based Wind Farms to Enhance Stability of LCC-HVDC", IEEE Multidisciplinary, 2020, [Jiao 2020] determines airgap flux feedback based on both stator and rotor currents. The solution of S. Sha et al., "Control, Operation and Stability Characteristics of Grid-Forming Type III Wind Turbines", 19th Wind Integration Workshop, 2020, [NREL 2020] regulates the magnetic flux linking the stator windings.

Such approaches may however rely on flux estimation. Besides other measurements, flux estimation may generally require stator current measurements, which are often noisy. Such noise may propagate to the flux estimation and the remaining control. A rather high level of noise may thus be present in the feedback values and the control may be less stable.

SUMMARY

Accordingly, there is a need to mitigate at least some of the drawbacks mentioned above and to provide an improved control of a power converter for grid forming operation.

This need is met by the features of the independent claims. The dependent claims describe examples of the invention.

According to an aspect of the invention, a method of controlling the operation of a rotor side converter of a power generating system of a wind turbine in a grid forming mode is provided. The power generating system comprises a doubly fed induction generator (DFIG) wherein the rotor side converter is coupled to a rotor of the DFIG to control currents in the rotor of the DFIG. The method comprises obtaining a control reference for providing voltage control during operation in the grid forming mode; generating, from the control reference, a reference for a magnetizing voltage of the DFIG; receiving a feedback signal indicative of stator voltage of a stator of the DFIG; generating a rotor current reference signal for a rotor current of the rotor of the DFIG from the magnetizing voltage reference and the stator voltage feedback signal; and controlling the rotor side converter in accordance with the rotor current reference signal.

By such method, several advantages may be achieved. By generating the rotor current reference from the magnetizing voltage reference and the stator voltage feedback signal, a flux estimation may no longer be required. In particular, the need to use stator current measurements, which may suffer from noise, for flux estimation and feedback may be avoided. Rather, the control may make use of the stator voltage, which may be measurable. Consequently, noise may be reduced, which may lead to fewer oscillations and an improved dynamic response of the control system. Also, the use of fewer sensors to provide the feedback may be a further advantage. Further, by deriving the reference for the rotor current, the control can employ inner current control loops. This may allow a fast control and may ensure compatibility with existing control systems. It may further allow switching from a grid forming mode into a grid following mode, or operating between these modes by adapting the speed of the outer control loop. Further, the current control loop may allow the compatibility with existing control strategies to be maintained. An inner current control loop may further provide the benefit that the output current of the converter may be limited effectively to protect the converter. Other grid forming controllers may for example not comprise a respective current control loop and rather directly derive a voltage reference for PWM control; such controllers may thus not provide such benefits.

The control method may employ an outer control loop that uses the control reference to derive a signal from which the magnetizing voltage reference is generated. Such outer control loop may further include the control in accordance with the magnetizing voltage reference. It may further include an inner control loop providing rotor current control based on the generated rotor current reference signal. The inner control loop may operate faster than the outer control loop. The control reference may for example be indicative of a voltage reference for the grid forming mode, e.g. for the output terminal voltage of the DFIG.

A reference signal may in particular be a command, which, e.g. may command the respective control to adjust operation so as to achieve the commanded value, such as a magnetizing voltage command or rotor current command.

The magnetizing voltage may in particular correspond to the air-gap EMF (electromotive force), or induced EMF. It may be the voltage induced by the flux linkage (in particular the change thereof) in the stator.

In an example, the determining of the rotor current reference signal may be performed in a rotating two axis reference frame, such as a d-q frame. This may facilitate the control. The generating of the rotor current reference signal may comprise the applying of a cross coupling between the signal portions of the two axes, e.g. of the d-axis and q-axis.

As an example, the magnetizing voltage reference may be provided for each of the two axes, and the rotor current reference signal may be generated for each of the two axes. The current reference signal for each one of the two axes may be derived from the magnetizing voltage references of both axes (i.e. d and q signal components may be employed).

In some examples, the method may comprise setting the magnetizing voltage reference for one of the two axes to zero. For example, the d-axis magnetizing voltage reference may be set to zero. The magnetizing voltage may thereby be aligned with the q-axis which may facilitate control.

The method may further comprise deriving of a magnetizing voltage error signal from a difference between the magnetizing voltage reference and the stator voltage feedback signal, and deriving the rotor current reference signal from the magnetizing voltage error signal. By forming the error signal using the stator voltage feedback signal, noise in the error signal may be reduced.

The magnetizing voltage error signal may be determined in a two axis system (e.g., the d-q system mentions above), and the rotor current reference signal may be derived for each axis using the magnetizing voltage error signal of both axes.

In a beneficial example, generating of the rotor current reference signal for a first of the axes (e.g. the d-axis) may comprise applying a respective transfer function, e.g. a gain, to each of the magnetizing voltage error signals of each axis and combining the processed (e.g. gained) magnetizing voltage error signals by a combiner. The generating of the rotor current reference signal for a second of the axes may comprise applying a respective transfer function, e.g. a gain, to each of the magnetizing voltage error signals of each axis and combining the processed (e.g. gained) magnetizing voltage error signals by a combiner. Although cross-terms between the two axes may be introduced this way, the control may be more stable and less noisy by controlling the magnetizing voltage.

For example, the method may further comprise applying a transfer function (e.g., a gain) to at least one axis of the magnetizing voltage reference (e.g., to $e_{q,ref}$) and combining the resulting processed magnetizing voltage reference with the processed magnetizing voltage error signals for the other axis (e.g. for the d-axis) by a combiner (which may be the same combiner that combines the processed error signals or a different combiner). In some examples, both the d-axis and q-axis magnetizing voltage reference may be processed respectively and combined with the processed error signals for the respective other axis. The use of the additional coupling is optional.

For example, the rotor current reference signal may be derived from the magnetizing voltage reference $e_{ref}$ and the stator voltage feedback signal $v_s$ based on the relationship

$$i_{r,ref} + \frac{je_{ref}}{w_s L_m} = \frac{R_s - jw_s l_s}{R_s^2 + (w_s l_s)^2}\left(e_{ref} - v_s\right)$$

wherein $w_s$, $R_s$, $L_m$ and $l_s$ are the stator angular synchronous frequency, stator resistance, magnetizing inductance, and stator inductance, respectively. j is the imaginary unit. The second term on the right hand side of the equation is optional and may be neglected. As the quantities may be represented in the d-q frame as imaginary quantities having a real and imaginary parts corresponding to the d and q axes, it may be apparent that the relationship includes cross-terms between the d and q axes. These may be implemented by the respective transfer functions explained above, e.g. as respective gains. A precise and efficient control that does not require flux estimation may thus be achieved.

In an example, generating the rotor current reference signal may comprise generating a rotor current reference signal referenced to a stator side of the DFIG and converting the generated stator-referenced rotor current reference signal into the rotor current reference signal referenced to the rotor side of the DFIG. Performing the control with stator-referenced quantities may facilitate the control. Conversion may occur using winding factors and transformer equivalent circuits. The conversion may in particular consider winding numbers of stator and rotor and/or the type of coupling of the stator windings and the rotor winding (e.g. star (or Y-) coupling, delta-coupling, etc.).

The control reference may for example comprise a voltage reference of the grid forming control and/or a reactive power reference. Preferably, both may be employed. This may allow a grid stabilizing operation of the power system and the meeting of reactive power requirements. For the respective reference, a respective feedback signal may be obtained (e.g. received or generated from other received, measured or otherwise obtained quantities). A respective error signal may be formed from the respective control reference(s) and the respective feedback signal(s).

For example, the reference for the magnetizing voltage may be derived from a voltage control error signal generated from a voltage refence and a voltage feedback signal of the terminal voltage of the DFIG and/or generated from a reactive power reference and a reactive power feedback signal. In some examples, at least one of the control references may be received from an external controller. The magnetizing voltage reference may for example be generated by applying a transfer function (e.g. a gain $K_Q$) to the voltage control error signal and by integrating the resulting processed error signal.

In a particular example, the voltage reference may be combined (e.g. by an adder) with the voltage feedback signal to form a first error signal, and a first transfer function (e.g. a gain $D_Q$) may be applied to the first error signal to obtain a first processed error signal. Further, the reactive power reference and the reactive power feedback signal may be combined with the first processed error signal to form a second error signal (e.g. by respective adders), which may correspond to the voltage control error signal.

An outer control loop for output voltage and/or reactive power may thus be implemented.

In an example, the method may further comprise determining an angular frequency for the DFIG from a further control reference and a feedback signal for the further control reference. Such further control reference may be an active power reference and/or a torque reference for the DFIG. Such further control reference may for example be obtained from a maximum power point tracking (MPPT) control of the wind turbine.

It may further comprise integrating the determined angular frequency to derive a phase angle reference signal for the DFIG control. The angular frequency and phase angle may in particular be derived under consideration of a rotational speed of the rotor of the DFIG any may be employed for controlling the rotor currents.

In an example, the control may comprise an inner current control loop that generates from the rotor current reference signal a PWM voltage signal for controlling semiconductor switches of the rotor side converter using pulse width modulation (PWM). The method may in particular comprise deriving a phase angle reference signal from the torque reference and/or active power reference and a frequency reference for a frequency of the grid forming mode (e.g. a nominal frequency for the power grid).

The phase angle reference may be used to transform a control signal, in particular a PWM voltage signal, generated by the grid forming control from a rotating reference frame (e.g., d-q frame) into a non-rotating reference frame (e.g., abc frame). The control signal may then be applied to the rotor side converter.

Preferably, operation in the grid forming mode may comprise operating a virtual inertia control scheme, e.g. a virtual synchronous machine (VSM) control scheme, to derive a phase reference for controlling the rotor currents. The virtual inertia control may receive a further reference (e.g. the active power reference or the torque reference) and may generate a virtual inertia output signal. The method may further comprise applying a damping term between the further reference and the virtual inertia output signal. By applying such damping term, the impact on mechanical components of the wind turbine by the grid forming operation, which may result in sudden torque changes on the DFIG due to variations on the power grid, may be reduced. The virtual inertia output signal may for example be an angular frequency for the DFIG (e.g., in accordance with which the rotor currents are to be controlled, which may for example be integrated to obtain the phase angle reference signal).

Preferably, the damping term may comprise at least a feedforward damping term ($D_{ff}$) that may act (directly) on the further reference to generate a feedforward damping signal. The feedforward damping signal may be combined with the virtual inertia output signal. For example, a feedforward damping coefficient may be applied directly to the torque or active power reference to generate the feedforward damping signal. Such feedforward damping term may allow an efficient reduction of the impact of grid forming operation on mechanical components of the wind turbine. It may allow an increase of the inertia of the virtual inertia control scheme with reduced impact on component life. In particular, mechanical component reinforcements and/or modifications in the drive controller, which may otherwise be needed, may be avoided. It may thus be possible to maintain the wind turbine controllers independently on the converter controller scheme.

The damping term may further comprise at least an error damping term that acts on a difference between the further reference and a feedback signal for the further reference (e.g., on a difference between the torque reference and a torque feedback signal, or on a difference between an active power reference and active power feedback signal) to generate an error damping signal. The error damping signal may be combined with the virtual inertia output signal. For example, a damping coefficient may be applied to the difference to generate the error damping signal. The damping coefficient may depend on a virtual inertia of the virtual inertia control scheme; it may for example be $D_d/J_v$, wherein $J_v$ is the virtual inertia and $D_d$ a damping coefficient.

According to a further aspect of the invention, a control system configured to control the operation of a rotor side converter of a power generating system of a wind turbine in a grid forming mode is provided. The power generating system comprises a doubly fed induction generator (DFIG), wherein the rotor side converter is coupled to a rotor of the DFIG to control currents in the rotor of the DFIG. The control system is configured to perform any of the methods disclosed herein.

According to a further aspect of the invention, a power generating system of a wind turbine is provided. The power generation system comprises a doubly fed induction generator (DFIG) and a power converter. The power converter comprises a rotor side converter coupled to a rotor of the DFIG to control currents in the rotor of the DFIG. The power generating system may further comprise a control system having any of the configurations described herein.

The power converter may further comprise a grid side converter (GSC), which may be coupled by a DC link to the rotor side converter. The power converter may for example be a back-to-back converter providing bi-directional AC/AC conversion. A stator of the DFIG and an AC side of the GSC may be coupled together (e.g. to a common AC bus or to different secondary windings of a transformer), and may further be coupled to a power grid. In operation (in particular super-synchronous operation), the power generating system may feed electrical power into the power grid from the DFIG stator and from the GSC.

According to a further aspect of the invention, a wind turbine comprising a power system having any of the configurations described herein is provided.

According to a further aspect of the invention, a computer program for controlling the operation of a rotor side converter of a power generating system of a wind turbine in a grid forming mode is provided. The power generating system comprises a doubly fed induction generator, DFIG, and the rotor side converter is coupled to a rotor of the DFIG to control currents in the rotor of the DFIG. The computer program comprises control instructions which, when executed by a processing unit of a control system controlling the operation of the rotor side converter, cause the processing unit to perform any of the methods described herein. Such computer program, in particular the respective control instructions, may be provided on a volatile or non-volatile storage medium or data carrier, and/or may be provided via a communication connection, such as a wired or wireless network connection.

By such control system, power generating system, wind turbine, or computer program, advantages may be achieved that correspond to the advantages outlined further above with respect to the method.

It is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

BRIEF DESCRIPTION OF THE DRAWINGS

The forgoing and other features and advantages of the invention will become further apparent from the following detailed description read in conjunction with the accompanying drawings. In the drawings, like reference numerals refer to like elements.

Fig. 1 is a schematic drawing showing a power generating system including a control system according to an example of the invention.

Fig. 2 is a schematic drawing illustrating an outer voltage control loop of the control system according to an example of the invention.

Fig. 3 is a schematic drawing illustrating a magnetizing voltage control loop of the control system according to an example of the invention.

Fig. 4 is a schematic drawing illustrating an outer active power or torque control loop of the control system according to an example of the invention.

Fig. 5 is a schematic circuit diagram illustrating an equivalent circuit for a DFIG.

Fig. 6 is a flow diagram illustrating a method according to an example of the invention.

DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

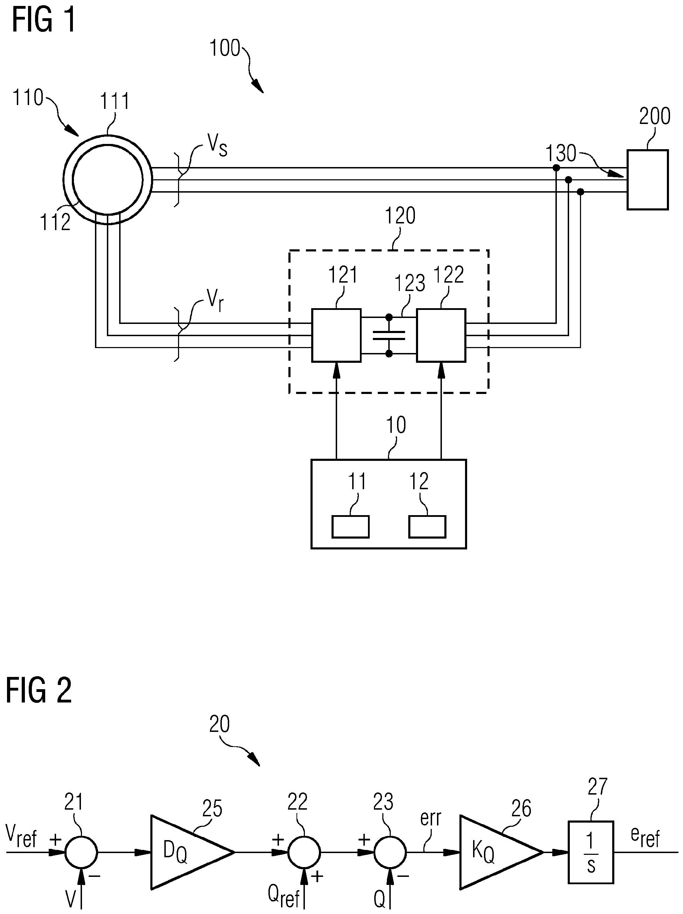

Figure 1 is a schematic drawing illustrating a power generation system 100 according to an exemplary implementation comprising a doubly fed induction generator (DFIG) 110 and a power converter 120. The DFIG 110 may comprise a stator 111 with stator windings and a rotor 112 with rotor windings. The stator 111 may be electrically coupled to a power grid 200 at a point of common coupling 130. The frequency of the power grid 200 may be characterized by a nominal or rated frequency $\omega_0$ which is for example 50 Hz or 60 Hz and an actual monitored grid frequency $\omega_g$. The stator 111 outputs a stator voltage $v_s$. The electrical power output by the DFIG 110 may be a polyphase power, preferably a three-phase power. Both the rotor 112 and the stator 111 preferably comprise three phases.

The power converter 120 may comprise a rotor side converter (RSC) 121 and a grid side converter (GSC) 122, which may be electrically coupled via a DC-link 123. The rotor side converter 121 may be electrically coupled with the rotor 112 to control the excitation currents in rotor 112. The power converter 120 may be capable of bidirectional transfer of electrical power from the rotor side to the grid side and from the grid side to the rotor side, and may further be capable of imposing a rotor current and/or rotor voltage on each phase of the rotor, the rotor current and/or voltage in each phase preferably being defined by a respective current and/or voltage magnitude and phase angle. For example, the power converter 120 (in particular the RSC) may impose a sinusoidal signal on each phase by making use of pulse-width modulation (PWM). Power converter 120 may a be bi-direction AC/AC converter. Other implementations may employ a power converter without DC link or only an AC/DC converter, with the AC side coupled to the rotor 112. The general operation and function of power generating system 100 may correspond to the known DFIG topology and may implement and of the know control methods, such as disclosed in the documents cited in the background section above.

The operation of the RSC 121, and in particular of the power converter 120 and the power generation system 100, may be controlled by a control system 10. The control system 10 may comprise a processing unit 11 and memory 12. Processing unit 11 may for example include a digital signal processor, an application specific integrated circuit, a field programmable gate array, a microprocessor or the like. Memory 12 may include RAM, ROM, Flash Memory, a hard disk drive and the like. Control system 10 may be implemented in one or more controllers, for example a wind turbine controller and a converter controller, each of which may include a respective processing unit and memory. Control system 10 may thus be a distributed control system. It may further comprise components common to a computer system, such as input and output interfaces, a bus coupling the components of the control system, and a user interface.

The control system may be configured to operate the rotor side converter 121 in a grid forming mode in accordance with a reference voltage $V_{ref}$ and/or a reactive power reference $Q_{ref}$, wherein the power system 100 (in particular the stator 111) acts as a voltage source that stabilizes the voltage and/or frequency of the power grid 200. Controlling the RSC 121 may be based on a virtual inertia control scheme, e.g. a virtual synchronous machine (VSM) control, that emulates a synchronous generator. The GSC 122 may be operated using a vector control scheme or inertia synchronization control. The latter two are known control schemes and will thus not be described in greater detail here. In the virtual synchronous machine operation, a swing of a rotor of a synchronous machine may be simulated and the wound rotor induction generator may be operated such that its inertial response corresponds to that of a synchronous generator. Besides using VSM, other virtual inertia control schemes may be implemented for the RSC 121, such as droop based control, virtual oscillator control, and the like. It is noted that the control generally occurs in a rotating reference frame that rotates synchronously with the stator voltage. A Park transform may be used to transfer the three phase voltages and currents from the stationary frame (abc-frame) into the rotating reference frame (d-q frame), as known in the art.

To provide a reliable and stable control, in which noise of the feedback signals of the control is reduced, the control of RSC 121 employs an outer control loop for voltage and/or reactive power and an outer control loop for active power and/or torque. The active power and/or torque control loop may implement the virtual inertia control scheme and may generate a phase angle reference for a phase of the output power of DFIG 110 (which may be generated in form of a phase angle reference for the rotor voltage of rotor 112, which is controlled). The voltage and/or reactive power control loop may provide control of the stator voltage of DFIG 110 and may use an intermediate magnetizing voltage control loop to generate a rotor current reference for a rotor current of rotor 112. The control may further implement an inner current control loop, which employs the rotor current reference and the phase angle reference to control the rotor currents, in particular by generating a voltage reference signal for a PWM controller that generates a PWM signal from the voltage reference signal. The phase angle reference may be used for converting the voltage reference from a rotating (d-q) frame into a stationary (abc) frame, in which the PWM control of the semiconductor switches of the RSC 121 occurs. The inner current control loop as such is known in the art, and any of the known configurations may be employed, such as described in WO 2022/263331 A1 or in [NREL 2020]. The inner current control loop is thus not explained in greater detail here.

Conventional control schemes may employ a direct relationship between flux and currents. In these cases, feedback signals may have to be estimated and may not correspond to measured values. Commonly, flux feedback signals are estimated based on inductance values and currents. This results in noise, and may further lead to instable operation.

For reducing such negative effects, the present solution may align the control with the magnetizing voltage instead of aligning with the flux. Consequently, stator voltage may be employed directly as a feedback signal and hence, estimations may be reduced or may even be completely avoided.

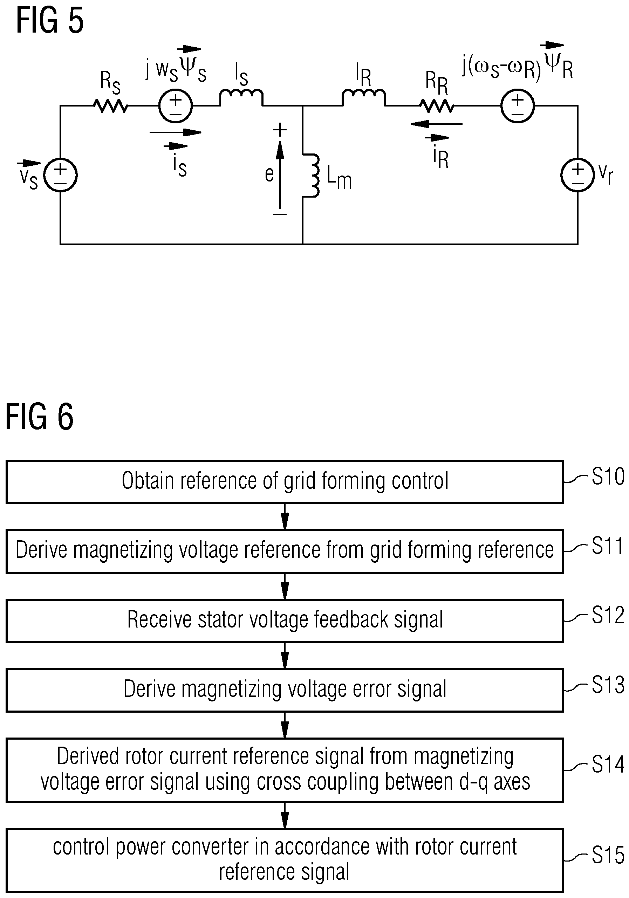

The control may be derived from the equivalent circuit of DFIG 110, which is shown in Fig. 5, wherein $v_s$ is the stator voltage, $i_s$ is the stator current, $w_s$ is the angular synchronous frequency on the stator side, $R_s$ is the stator ohmic resistance, $\psi_S$ is the stator flux, and $l_s$ is the stator inductance. The subscript 'r' or 'R' designates the respective quantities on the rotor side of the DFIG. Further, $L_m$ designates the magnetizing inductance, and e presents the magnetizing voltage. The magnetizing voltage e may in particular correspond to the air-gap EMF (also termed induced EMF), i.e. to the voltage across the magnetizing inductance $L_m$.

To control the stator voltage $v_s$ of the DFIG by means of the rotor currents, the relationship between the rotor current $i_r$ and the stator voltage $v_s$ and the magnetizing voltage e is derived in the following. Based on the equivalent circuit of Fig. 5, the equation:

$$v_S - e = R_S i_S + l_S \frac{di_S}{dt} + j w_S l_S\, i_S \qquad (1)$$

can be derived. In the following, the steady state is considered so that derivative terms can be assumed to approach zero. Equation (1) may then be rewritten as

$$i_S = \frac{v_S - e}{R_S + j w_S l_S} \qquad (2)$$

Further, the magnetizing voltage e, e.g. the air-gap EMF (voltage on the magnetizing inductance) can be presented by:

$$e = L_m \frac{di_m}{dt} + j w_S L_m i_m \qquad (3)$$

The magnetizing current $i_m$ may correspond to the sum of the stator current and the rotor current, so that equation (3) may be rewritten as:

$$e = L_m \frac{d(i_S + i_r)}{dt} + j w_S L_m (i_S + i_r) \qquad (4)$$

Again approximating the derivative term as zero for the steady state, the equation can be rewritten as

$$i_S = \frac{e}{j w_S L_m} - i_r = \frac{-je}{w_S L_m} - i_r \qquad (5)$$

Substituting equation (2) into equation (5) results in

$$\frac{e - v_S}{R_S + j w_S l_S} = i_r + \frac{je}{w_S L_m} \qquad (6)$$

which can be rewritten as:

$$\left(\frac{e-v_s}{R_s+jw_s l_s}\right)\left(\frac{R_s-jw_s l_s}{R_s-jw_s l_s}\right) = i_r + \frac{je}{w_s L_m} \tag{7}$$

$$\frac{R_s-jw_s l_s}{R_s^2+(w_s l_s)^2}(e-v_s) = i_r + \frac{je}{w_s L_m} \tag{8}$$

The rotor current can thus be expressed as:

$$i_r + \frac{je}{w_s L_m} = \frac{R_s-jw_s l_s}{R_s^2+(w_s l_s)^2}(e-v_s) \tag{9}$$

As a result, a relationship between the rotor current and the difference between the magnetizing voltage e and the stator voltage $v_s$ is obtained, so that a rotor current reference $i_{r,ref}$ can be derived from a magnetizing voltage reference $e_{ref}$ in a synchronous rotating frame by:

$$i_{r,ref} + \frac{je_{ref}}{w_s L_m} = \frac{R_s-jw_s l_s}{R_s^2+(w_s l_s)^2}(e_{ref}-v_s) \tag{10}$$

The quantities are generally vectors in the d-q frame, which are represented as real and imaginary parts in the representation of eq. 10. Accordingly, it will be readily apparent that the term in eq. 10 that couples the rotor current reference to the magnetizing voltage reference comprises cross-coupling terms between the d and q axes (the term comprises real and imaginary parts). The control structure implementing the control of eq. 10 may thus comprise a cross-coupling between the d and q axes. An exemplary implementation of the control is described below with respect to Figs. 2-4.

Fig. 2 shows an example of the outer voltage control loop. A voltage reference command $V_{ref}$ for the grid forming operation is obtained, e.g. from an external controller. $V_{ref}$ is combined with a respective voltage feedback signal V by combiner 21 (e.g. subtracted), and a control element 25 with a transfer function $D_Q$, which may be a gain or filter or a more complex control element (e.g., PI or the like), is applied to the resulting voltage error signal. The error signal processed by the control element 25 is combined by combiner 22 with a reactive power reference $Q_{ref}$, which may be obtained from an external controller, e.g. from a wind farm controller or a grid operator. It may further be combined by combiner 23 with a reactive power feedback signal Q. The resulting error signal err may be processed by a control element 26 with transfer function $K_Q$, which may be a gain or filter or a more complex control element (e.g., PI or the like). The resulting processed error signal is integrated by the integrator 27 to obtain a reference $e_{ref}$ for the magnetizing voltage e. It should be clear that this is only an example of how the reference $e_{ref}$ can be derived; in other implementations, only $V_{ref}$ or only $Q_{ref}$ may for example be used.

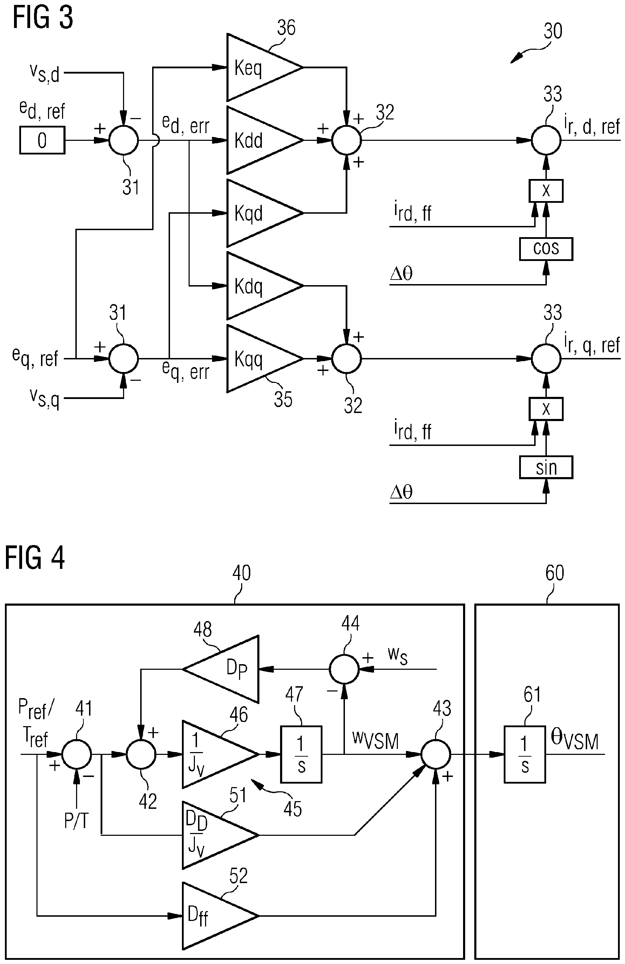

Fig. 3 shows an example for the magnetizing voltage control based on eq. 10, wherein the d and q components are shown. The control may align the magnetizing voltage with the q-axis of the rotating reference frame (d-q frame), so that the d-component of $e_{d,ref}$ may be set to zero, and the q-component may correspond to $e_{ref}$ obtained by the outer control loop of Fig. 2. A stator voltage feedback signal $v_s$ may be obtained, e.g. measured or obtained from a control. For example, it may be obtained from the VSM control, in which stator voltage may be used as a feedback signal; the stator voltage feedback signal may have been processed, e.g. filtered. The stator voltage feedback signal $v_{s,d}$, $v_{s,q}$ is combined with the magnetizing voltage reference by respective combiners 31, in particular subtracted from the reference $e_{ref}$. The resulting error signal $e_{d,err}$, $e_{q,err}$ is processed by control elements 35, which may provide a cross-coupling between the d and q signal components. Control elements 35 may implement the term of eq. 10 that couples the voltage difference to the rotor current reference $i_{r,ref}$. Control elements 35 may have respective transfer functions (e.g. gain coefficients) $K_{dd}$, $K_{qd}$, $K_{dq}$, $K_{qq}$, wherein $K_{qd}$ and $K_{dq}$ are the cross-coupling terms. Further, to implement the second term on the left hand side of eq. 10, a control element 36 may be provided that receives the q-axis reference $e_{q,ref}$ and the output of which is combined with the d-axis processed error signal. Control element 36 may for example apply a gain Keq to the q-axis reference of the magnetizing voltage e. It is noted that a respective gain is not needed for the d-axis reference $e_{d,ref}$, as it is set to zero. Combiners 32 may combine the respective processed signals.

The quantities and thus the processed signals may be referenced to the stator side of the DFIG 110. Optionally, a conversion may occur to the rotor side referenced quantities (not shown). The conversion will generally depend on the particular implementation of the DFIG 110.

As a result, rotor current references $i_{r,d,ref}$ and $i_{r,q,ref}$ may be obtained. These may be used in an inner current control loop (not shown) to control the rotor currents in the rotor 112.

Optionally, corrections $i_{rd,ff}$ and $\Delta\theta$ for the rotor current and phase angle may be applied by respective combiners 33.

Active power P (or equivalently torque T) of the DFIG 110 is controlled by controlling the frequency or phase angle of the output voltage. Fig. 4 shows an example of a respective outer control loop including a frequency control 40. An active power reference $P_{ref}$ or torque reference $T_{ref}$ is received, for example from a wind turbine controller. Such wind turbine controller may form part of the control system 10 and may employ MPPT control for deriving an active power reference or torque reference for DFIG 110. A respective active power feedback signal P or torque feedback signal T is received, e.g. measured or otherwise obtained, and combined (e.g. subtracted) with the respective reference by combiner 41.

The frequency control 40 may implement a virtual inertia control, in particular a VSM control 45. Virtual inertia control is known in the art, and any of the respective control schemes may be implemented in frequency control 40. The exemplary VSM control 45 comprises a virtual inertia $J_v$ applied by control element 46, the output of which is integrated by integrator 47, which results in a VSM output signal $w_{VSM}$, which corresponds to an angular frequency. The stator angular frequency $w_s$ is added to the output signal $w_{VSM}$ (combiner 44) and is fed back (combiner 42) via a damping control element 48 applying a damping coefficient $D_P$ to provide the damping of the VSM control. The VSM output signal, which corresponds to an angular frequency, is integrated by an integrator 61 of a VSM phase generation unit 60 to generate the phase angle $\theta_{VSM}$. The obtained phase angle $\theta_{VSM}$ is used in the inner current control loop for transforming the generated control signals, in particular the voltage reference for PWM modulation, from the rotating d-q frame into the abc frame, as common in the art. The phase of the output voltage of the DFIG 110 and thus the active power provided to the power grid (and in turn the DFIG torque) may thus be controlled efficiently.

The grid forming control may result in drive train oscillations, for example if the DFIG output power is varied due to grid disturbances, and these may be transferred to other mechanical structures of the wind turbine. Existing controllers in charge of damping drive train oscillations may not be adequate and mayor modifications may be required to account for such oscillations.

Preferably, the outer control loop 40 may comprise a feedforward damping term that provides additional damping. A feedforward damping control element 52 may be provided that (directly) receives the respective reference ($P_{ref}$ or $T_{ref}$) and that applies a damping coefficient $D_{ff}$ thereto. The resulting feedforward damping signal may be combined (e.g. added) with the output of the virtual inertia control, e.g. the VSM output signal $w_{VSM}$, by a combiner 43. This may allow the providing of a high inertia without impacting the mechanical components of the wind turbine. In particular, it may provide an additional degree of freedom for tuning the frequency control 40, which may thus be enabled to efficiently damp the torque variations without reducing the inertial response.

Further, an additional damping term may be provided to provide further damping. An additional damping control element 51 may be provided that receives the difference between the respective reference ($P_{ref}$ or $T_{ref}$) and the respective feedback signal P or T, i.e. that receives the output of combiner 41. The additional damping control element 51 may apply a damping coefficient $D_D$, in particular $D_D/J_v$, to the difference. The resulting additional damping signal may be combined (e.g. added) with the output of the virtual inertia control, e.g. the VSM output signal $w_{VSM}$, by the combiner 43. This may increase the damping without an impact on steady state control.

A particularly beneficial control may be achieved by applying the damping term 52 in addition to the damping term 51. This may allow high inertia solutions without impacting mechanical component life. In particular the damping term 52 may allow an increase of the inertia with only little impact on component life. Mechanical component reinforcements or major modifications in the wind turbine controller may thus not be required for coping with torque oscillations resulting from grid disturbances during grid forming operation.

Fig. 6 is a flow diagram illustrating a method according to an example. In step S10, a reference is obtained for operating the power generating system in a grid forming mode. For example, $V_{ref}$ and/or $Q_{ref}$ are obtained. In step S11, a magnetizing voltage reference (e.g., $e_{ref}$) is derived from the obtained grid forming reference $V_{ref}$ and/or $Q_{ref}$. This may occur as described with respect to Fig. 2. In step S12, the stator feedback signal $v_s$ is received. A magnetizing voltage error signal is derived in step S13, e.g. by subtracting the feedback signal from the reference. A rotor current reference signal, e.g. $i_{r,ref}$, is derived in step S14 from the magnetizing voltage error signal using cross coupling between the d and q axes. This may occur as described with respect to Fig. 3 using the respective cross-coupling terms. In step S15, the power converter, in particular the RSC 121, is controlled in accordance with the rotor current reference signal. As mentioned above, this may include the deriving of a PWM voltage reference from the rotor current reference $i_{r,ref}$ and the transforming of the PWM voltage reference into the abc frame using the phase angle derived as for example described with respect to Fig. 4. The method may be operated continuously during operation of the power generation system 100 in the grid forming mode.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

**Claims**

1. A method of controlling the operation of a rotor side converter (121) of a power generating system (100) of a wind turbine in a grid forming mode, wherein the power generating system (100) comprises a doubly fed induction generator, DFIG, (110) wherein the rotor side converter (121) is coupled to a rotor (112) of the DFIG (110) to control currents in the rotor of the DFIG, wherein the method comprises:

    - obtaining a control reference ($V_{ref}$, $Q_{ref}$) for providing voltage control during operation in the grid forming mode;
    - generating, from the control reference ($V_{ref}$, $Q_{ref}$), a reference for a magnetizing voltage ($e_{ref}$) of the DFIG (110);
    - receiving a feedback signal indicative of stator voltage ($v_s$) of a stator (111) of the DFIG (100);
    - generating a rotor current reference signal ($i_{r,ref}$) for a rotor current of the rotor (112) of the DFIG from the magnetizing voltage reference ($e_{ref}$) and the stator voltage feedback signal; and
    - controlling the rotor side converter (121) in accordance with the rotor current reference signal ($i_{r,ref}$).

2. The method according to claim 1, wherein the determining of the rotor current reference signal ($i_{r,ref}$) is performed in a rotating two axis reference frame.

3. The method according to claim 2, wherein the generating of the rotor current reference signal ($i_{r,ref}$) comprises the applying of a cross coupling between signal portions of the two axes (d, q) .

4. The method according to claim 2 or 3, wherein the magnetizing voltage reference ($e_{ref}$) is provided for each of the two axes, and wherein the rotor current reference signal ($i_{r,ref}$) is generated for each of the two axes, wherein the current reference signal ($i_{r,ref}$) for each one of the axes is derived from the magnetizing voltage references ($e_{ref}$) of both axes.

5. The method according to any of the preceding claims, further comprising deriving of a magnetizing voltage error signal ($e_{err}$) from a difference between the magnetizing voltage reference ($e_{ref}$) and the stator voltage feedback signal, and deriving the rotor current reference signal ($i_{r,ref}$) from the magnetizing voltage error signal ($e_{err}$).

6. The method according to claim 5, wherein the magnetizing voltage error signal ($e_{err}$) is determined in a two axes system, and the rotor current reference signal ($i_{r,ref}$) is derived for each axis using the magnetizing voltage error signal ($e_{err}$) of both axes.

7. The method according to claim 5 or 6, wherein generating of the rotor current reference signal ($i_{r,ref}$) for a first of the axes (d) comprises applying a respective transfer function (Kdd, Kdq) to each of the magnetizing voltage error signals ($e_{d,err}$, $e_{q,err}$) of each axis (d, q) and combining the processed magnetizing voltage error signals by a combiner (32), and wherein the generating of the rotor current reference signal ($i_{r,ref}$) for a second of the axes (q) comprises applying a respective transfer function (Kdq, Kqq) to each of the magnetizing voltage error signals ($e_{d,err}$, $e_{q,err}$) of each axis (d, q) and combining the processed magnetizing voltage error signals by a combiner (32).

8. The method according to claim 7, further comprising applying a transfer function (36) to at least one axis of the magnetizing voltage reference ($e_{q,ref}$) and combining the resulting processed magnetizing voltage reference with the processed magnetizing voltage error signals for the other axis by a combiner (32).

9. The method according to any of the preceding claims, wherein the control reference comprises a voltage reference ($V_{ref}$) of the grid forming control and/or a reactive power reference (Qref).

10. The method according to any of the preceding claims, wherein the reference for the magnetizing voltage ($e_{ref}$) is derived from a voltage control error signal (err) generated from a voltage refence ($V_{ref}$) and a voltage feedback signal (V) of the terminal voltage of the DFIG and/or generated from a reactive power reference ($Q_{ref}$) and a reactive power feedback signal (Q).

11. The method according to any of the preceding claims, wherein operation in the grid forming mode comprises operating a virtual inertia control, preferably a virtual synchronous machine, VSM, control, to derive a phase reference ($\theta_{VSM}$) for controlling the rotor currents, wherein the virtual inertia control receives a further reference ($T_{ref}$, $P_{ref}$) and generates a virtual inertia output signal ($w_{VSM}$), wherein the method further comprises applying a damping term between the further reference ($T_{ref}$, $P_{ref}$) and the virtual inertia output signal ($w_{VSM}$).

12. The method according to claim 11, wherein the damping term comprises at least a feedforward damping term ($D_{ff}$) that acts on the further reference ($T_{ref}$, $P_{ref}$) to generate a feedforward damping signal, wherein the feedforward damping signal is combined with the virtual inertia output signal ($W_{VSM}$).

13. The method according to claim 11 or 12, wherein the damping term comprises at least an error damping term ($D_D$) that acts on a difference between the further reference ($T_{ref}$, $P_{ref}$) and a feedback signal (T, P) for the further reference ($T_{ref}$, $P_{ref}$) to generate an error damping signal, wherein the error damping signal is combined with the virtual inertia output signal ($w_{VSM}$).

14. A control system configured to control the operation of a rotor side converter (121) of a power generating system (100) of a wind turbine in a grid forming mode, wherein the power generating system (100) comprises a doubly fed induction generator, DFIG, (110) wherein the rotor side converter (121) is coupled to a rotor (112) of the DFIG to control currents in the rotor of the DFIG, wherein the control system (10) is configured to perform the method of any of the preceding claims.

15. A computer program for controlling the operation of a rotor side converter (121) of a power generating system (100) of a wind turbine in a grid forming mode, wherein the power generating system (100) comprises a doubly fed induction generator, DFIG, (110) and wherein the rotor side converter (121) is coupled to a rotor (112) of the DFIG to control currents in the rotor of the DFIG, wherein the computer program comprises control instructions which, when executed by a processing unit (11) of a control system (10) controlling the operation of the rotor side converter (121), cause the processing unit (11) to perform the method according to any of claims 1-13.

FIG 1

FIG 2

FIG 3

FIG 4

# FIG 5

# FIG 6

| | |
|---|---|
| Obtain reference of grid forming control | S10 |
| Derive magnetizing voltage reference from grid forming reference | S11 |
| Receive stator voltage feedback signal | S12 |
| Derive magnetizing voltage error signal | S13 |
| Derived rotor current reference signal from magnetizing voltage error signal using cross coupling between d-q axes | S14 |
| control power converter in accordance with rotor current reference signal | S15 |

Europäisches
Patentamt

European
Patent Office

Office européen
des brevets

# EUROPEAN SEARCH REPORT

**Application Number**

EP 24 38 2618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 106 179 A1 (SIEMENS GAMESA RENEWABLE ENERGY INNOVATION & TECHNOLOGY SL [ES]) 21 December 2022 (2022-12-21) | 1,2,4,5, 9-11,14, 15 | INV. H02P9/00 |
| Y | * paragraphs [0001], [0055] - [0059] * * paragraphs [0061] - [0063], [0068] * * paragraphs [0070], [0071], [0073], [0075], [0076] * * figures 1, 2, 4 * ----- | 3,6-8, 11-13 | |
| Y | US 11 451 065 B1 (WORKU MUHAMMED YIBRE [SA] ET AL) 20 September 2022 (2022-09-20) * column 15, lines 24-27 * ----- | 3 | |
| Y | CN 104 868 497 A (UNIV HUAZHONG SCIENCE TECH) 26 August 2015 (2015-08-26) * figure 2 * ----- | 6 | |
| Y | US 9 391 554 B2 (LI SHUHUI [US]; HASKEW TIM A [US]; UNIV ALABAMA [US]) 12 July 2016 (2016-07-12) * column 12, lines 61-66 * * figure 2 * ----- | 6 | |
| | | | TECHNICAL FIELDS SEARCHED (IPC) |
| Y | CN 106 026 175 A (UNIV ELECTRONIC SCIENCE & TECH CHINA) 12 October 2016 (2016-10-12) * description of Fig.2 * ----- | 7,8 | H02P |
| Y | CN 109 755 968 B (GUIZHOU POWER GRID CO LTD) 31 January 2020 (2020-01-31) * figure 2 * ----- | 11 | |
| Y | CN 109 787 274 B (CHINA ELECTRIC POWER RES INST CO LTD; STATE GRID CORP CHINA) 22 September 2023 (2023-09-22) * figure 3 * ----- | 11 | |

-/--

The present search report has been drawn up for all claims

| Place of search | Date of completion of the search | Examiner |
|---|---|---|
| Munich | 14 November 2024 | Roider, Anton |

EPO FORM 1503 03.82 (P04C01)

4

Europäisches
Patentamt

European
Patent Office

Office européen
des brevets

# EUROPEAN SEARCH REPORT

**Application Number**

EP 24 38 2618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 116 191 472 A (UNIV INNER MONGOLIA TECHNOLOGY) 30 May 2023 (2023-05-30) <br> * figure 1 * <br> ----- | 11 | |
| Y | ES 2 944 782 B2 (UNIV MADRID CARLOS III [ES]) 9 April 2024 (2024-04-09) <br> * figure 3 * <br> ----- | 11 | |
| Y | US 6 420 795 B1 (MIKHAIL AMIR S [US] ET AL) 16 July 2002 (2002-07-16) <br> * figure 6B * <br> ----- | 12,13 | |
| Y | CN 114 665 471 A (UNIV SICHUAN ET AL.) 24 June 2022 (2022-06-24) <br> * figure 5 * <br> ----- | 12,13 | |
| Y | US 2024/072698 A1 (BASAK RUPAM [IN] ET AL) 29 February 2024 (2024-02-29) <br> * paragraphs [0023], [0061] * <br> * figure 8 * <br> ----- | 12,13 | |
| A,D | JIAO ET AL.: "Grid Forming Control for DFIG Based Wind Farms to Enhance Stability of LCC-HVDC", IEEE MULTIDISCIPLINARY, 2020, XP011807318, <br> * figure 2 * <br> ----- | 1,14,15 | **TECHNICAL FIELDS SEARCHED (IPC)** |
| A,D | MA ET AL.: "Stability analysis of sub-synchronous oscillation in power system connected with virtual synchronous DFIG", IET RENEWABLE POWER GENERATION, 2021, XP006116635, <br> * abstract * <br> * figure 2 * <br> ----- <br> -/-- | 1,14,15 | |

The present search report has been drawn up for all claims

| Place of search | Date of completion of the search | Examiner |
|---|---|---|
| Munich | 14 November 2024 | Roider, Anton |

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | S. SHA ET AL.: "Control, Operation and Stability Characteristics of Grid-Forming Type III Wind Turbines", WIND INTEGRATION WORKSHOP, 2020, XP002812470, * abstract * * figure 1 * ----- | 1,14,15 | |
| | | | **TECHNICAL FIELDS SEARCHED (IPC)** |

The present search report has been drawn up for all claims

| Place of search | Date of completion of the search | Examiner |
|---|---|---|
| Munich | 14 November 2024 | Roider, Anton |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 38 2618

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2024

| Patent document cited in search report | | Publication date | Patent family member(s) | | Publication date |
|---|---|---|---|---|---|
| EP 4106179 | A1 | 21-12-2022 | AU 2022295033 A1 | | 14-12-2023 |
| | | | CA 3223341 A1 | | 22-12-2022 |
| | | | EP 4106179 A1 | | 21-12-2022 |
| | | | EP 4327448 A1 | | 28-02-2024 |
| | | | US 2024275318 A1 | | 15-08-2024 |
| | | | WO 2022263331 A1 | | 22-12-2022 |
| US 11451065 | B1 | 20-09-2022 | NONE | | |
| CN 104868497 | A | 26-08-2015 | NONE | | |
| US 9391554 | B2 | 12-07-2016 | NONE | | |
| CN 106026175 | A | 12-10-2016 | NONE | | |
| CN 109755968 | B | 31-01-2020 | NONE | | |
| CN 109787274 | B | 22-09-2023 | NONE | | |
| CN 116191472 | A | 30-05-2023 | NONE | | |
| ES 2944782 | B2 | 09-04-2024 | NONE | | |
| US 6420795 | B1 | 16-07-2002 | NONE | | |
| CN 114665471 | A | 24-06-2022 | NONE | | |
| US 2024072698 | A1 | 29-02-2024 | CN 117638970 A | | 01-03-2024 |
| | | | EP 4333236 A1 | | 06-03-2024 |
| | | | US 2024072698 A1 | | 29-02-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022263331 A1

**Non-patent literature cited in the description**

- **MA et al.** Stability analysis of sub-synchronous oscillation in power system connected with virtual synchronous DFIG. *IET Renewable Power Generation*, 2021
- **HAN et al.** Nonlinear Adaptive Robust Control Strategy of Doubly Fed Induction Generator Based on Virtual Synchronous Generator. IEEE, 2019
- **JIAO et al.** Grid Forming Control for DFIG Based Wind Farms to Enhance Stability of LCC-HVDC. *IEEE Multidisciplinary*, 2020
- **S. SHA et al.** Control, Operation and Stability Characteristics of Grid-Forming Type III Wind Turbines. *19th Wind Integration Workshop*, 2020